# EUROPEAN PATENT SPECIFICATION

(11) **EP 0 370 822 B1**
(45) Date of publication and mention of the grant of the patent: **15.03.1995**
(21) Application number: 89312202.8
(22) Date of filing: 24.11.1989
(51) Int. Cl.: F16F 13/00, B60G 7/02

(54) **Vibration-proof rubber bush**
Antischwingungsgummihülse
Manchon antivibrations en caoutchouc

(30) Priority: 25.11.1988 JP 297359/88
(43) Date of publication of application: 30.05.1990
(73) Proprietor: KINUGAWA RUBBER INDUSTRIAL CO., LTD., Chiba-shi Chiba-ken (JP)
(72) Inventor: Yoda, Norio, Yotsukaido-shi Chiba-ken (JP); Fujiwara, Yoshinari, Yachiyo-shi Chiba-ken (JP); Tanuma, Shingo, Chiba-shi Chiba-ken (JP)
(74) Representative: Ablewhite, Alan James

(56) References cited:
- EP-A- 0 242 254
- DE-A- 3 721 175
- GB-A- 2 192 968
- US-A- 4 854 561

## Description

The present invention relates to a structure of a vibration-proof rubber bush used for supporting a vibrating member such as a suspension of an automotive vehicle.

For example, a compression rod bush has often been used to support a compression rod installed on one end of a transverse link of an automotive vehicle on a vehicle body. Such a compression rod bush is exemplified by Japanese Patent Application First Publication Showa 61-223344 published on October 3, 1986. The compression rod bush is U shaped in cross-section and is made of a rubber material. An insertion hole for the compression rod is provided in its inner portion.

Hence, in a case where the compression rod is vibrated in its axial direction or in a direction transverse to the axial direction, the rubber material of the bush absorbs the vibration described above to achieve an improvement in shimmy prevention performance.

The structure of the compression rod bush described above is advantageous in that the transverse link can elastically be supported by mere insertion of the compression rod into the bush. However, it has a problem in that in the case where a single kind of rubber material is used, a limit is present in increasing a loss factor (to be described later) so that a desired vibration-proof characteristic cannot be achieved.

On the other hand, although a relatively high loss factor can be achieved if a plurality of rubber materials are blended, a desired durability for the bush cannot be achieved.

DE-A-3 721 175 discloses a vibration-proof rubber bush structure in which a vibrating member is fixed in an inner envelope which is fitted via an elastic member in an outer envelope containing a liquid.

It is an object of the present invention to provide a structure of a vibration-proof rubber bush which can achieve both a high loss factor, due to the presence of a liquid, and a high durability, due to its construction.

The present invention provides a structure of a vibration-proof rubber bush for a vehicle, comprising:
a) an outer envelope having a bottom;
b) a liquid contained in the outer envelope; and
c) an inner envelope through which a rod end of a vibrating member is inserted and fixed, the inner envelope being fitted into the outer envelope via an elastic member;
characterised in that the inner envelope is attached to an annular member via the elastic member, which is located between the envelopes, and projections extend outwards from the annular member, the outer envelope being drawn so as to bring it into close contact with the projections, thereby sealing the liquid within the inner part of the outer envelope, the annular member being inwardly bent between the projections so as to receive the corresponding part of the outer envelope.

In the accompanying drawings:
Fig. 1 is a longitudinally cross-sectioned view of a compression rod rubber bush in a preferred embodiment of the present invention;
Fig. 2 is a laterally cross-sectioned view of the bush shown in Fig. 1;
Fig. 3 is an elevational view of a transverse link of a suspension of an automotive vehicle;
Fig. 4 is a longitudinally cross-sectioned view of an outer part of the bush shown in Figs. 1 and 2;
Fig. 5 is a longitudinally cross-sectioned view of an inner part of the bush shown in Figs. 1 and 2;
Fig. 6 is a longitudinally cross-sectioned view of the inner part shown in Fig. 4 inserted into the outer part shown in Fig. 5, during assembly of the bush;
Fig. 7 is a longitudinally cross-sectioned view of the bush after assembly;
Fig. 8 is a characteristic graph of the compression rod rubber bush in the direction P in Fig. 3;
Fig. 9 is a characteristic graph of the compression rod rubber bush in the direction Q in Fig. 3.

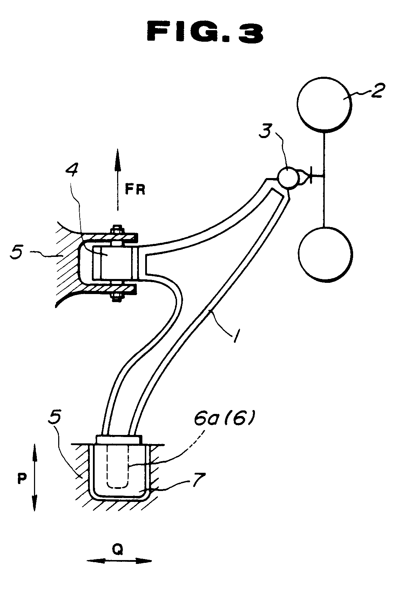

Fig. 3 shows a transverse link of an automotive vehicle to which the present invention is applicable. The transverse link 1 is used as a vibration member and constitutes a part of a vehicle suspension. In Fig. 3, the symbol F_{R} with an arrow denotes the forward direction of the vehicle.

The transverse link 1 has a ball joint 3 at the outside, the ball joint 3 supporting a wheel 2. An inner front portion thereof is supported on a vehicle body 5 via a transverse link bush 4. A compression rod 6 is installed at an inner rear portion thereof.

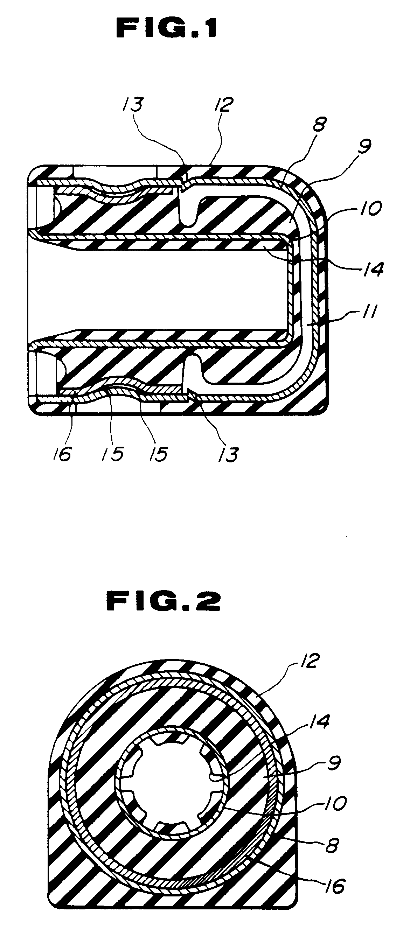

The compression rod 6 is supported on a compression rod bush 7 serving as a vibration-proof rubber bush installed on the vehicle body 5. The compression rod bush 7 has, as shown in Figs. 1 and 2, a U shaped outer metal envelope 8 in which an inner metal envelope 10 is fitted, the inner envelope 10 being coated with an elastic member 9. In addition, a silicone oil 11 fills a space between the elastic member 9 and the outer envelope 8. A rod end 6a of the compression rod 6 is inserted and fixed within the inner envelope 10.

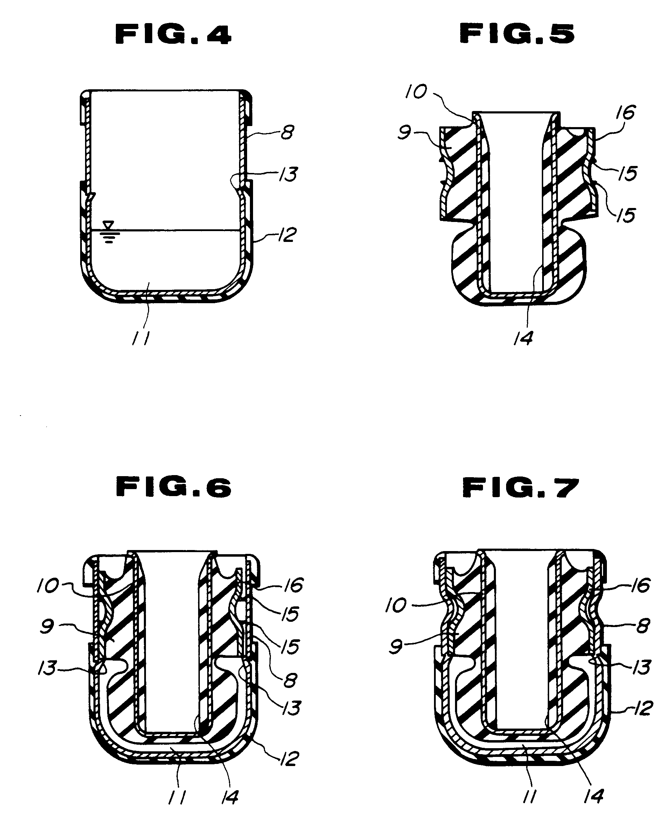

The outer envelope 8 is, specifically as shown in Fig. 4, coated with a rubber member 12 at an outer periphery of the outer envelope 8. The silicone oil 11 is contained in the outer envelope 8, which has a bottom and is provided with an inwardly extending engaging pawl 13 at a predetermined position of its inner peripheral surface.

On the other hand, the elastic member 9 is fixed to the inner envelope 10, as shown in Fig. 5. In addition, the inner envelope 10 has a bottom and rubber projections 14 are installed at its inner peripheral surface. A ring member 16 is attached to the elastic member 9 and has outwardly extending seal projections 15 tightly contacted with the inner peripheral surface of the outer envelope 8. A portion of the ring member 16 between the seal projections 15 is bent inwardly.

After the inner envelope 10 is fitted into the outer envelope 8 (in which a slightly larger amount of silicone oil 11 than the limited amount required in the finished bush is contained), as shown in Fig. 6, the outer envelope 8 is drawn between the seal projections 15 of the ring member 16, as shown in Fig. 7, so that the compression rod bush 7 is formed which contains the silicone oil.

Since the lower end of the ring member 16 is engaged with the pawl 13 on the outer envelope 8, the inner envelope 10 is set at a predetermined position relative to the outer envelope 8. In addition, since the outer envelope 8 is drawn so that it is brought into close contact with the seal projections 15 of the ring member 16, the silicone oil 11 is completely sealed.

It is noted that when the inner envelope 10 is fitted into the outer envelope 8, a part of the silicone oil 11 which is contained within the outer envelope 8 by the larger amount than the limited amount overflows as an extra amount of the silicone oil. Hence, no invasion of air into the outer envelope 8 occurs.

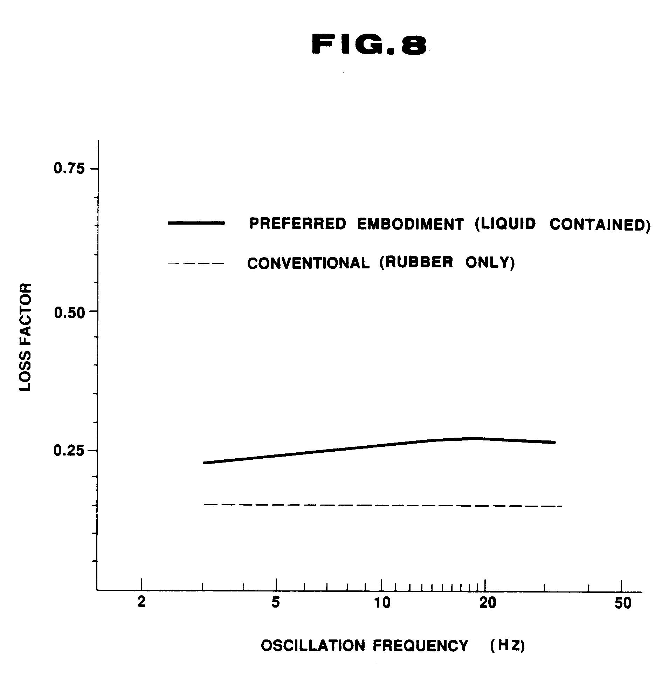

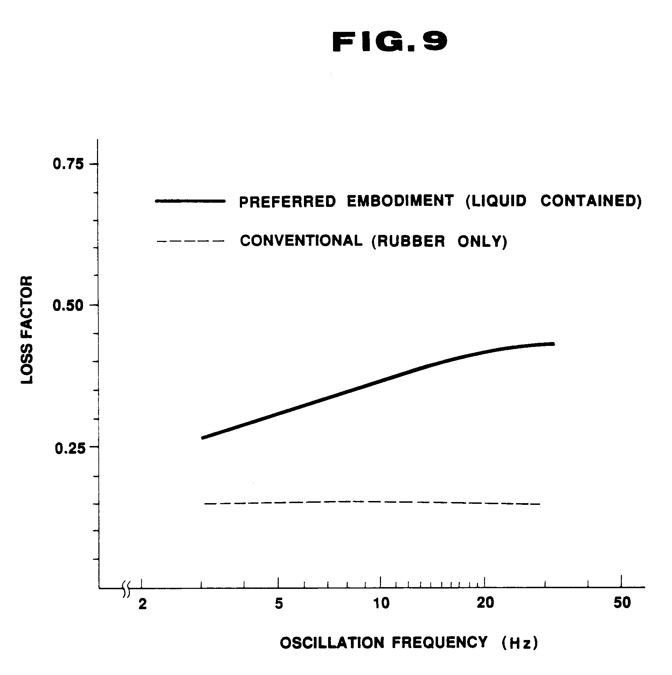

An experiment indicated the formed compression rod bush 7 provides a higher loss factor than that having no silicone oil 11 as shown in Figs. 8 and 9 since the compression rod bush 7 is filled with the silicone oil.

The loss factor χ is defined as 2C/C_{c} (= Cà/k₁), wherein C denotes a viscous damping coefficient of the rubber, C_{c} denotes a critical damping coefficient defined as 2 √m̅k̅₁̅ (wherein m denotes a mass of a rubber bush and k₁ denotes a stifness of spring or dynamic spring constant of the rubber bush), and à denotes a circular frequency.

In more details, for a P direction in Fig. 3, i.e., the axial direction of the compression rod 6, the rubber bush in which the silicone oil 11 is sealed (denoted by a solid line of Fig. 8 ) had a larger loss factor than the rubber bush in which no silicone oil is sealed (denoted by a broken line), as shown in Fig. 8 (in which a longitudinal axis denotes the loss factor and a lateral axis denotes a vibration frequency ).

For the direction transverse to the axial direction of the compression rod 6, the same result as shown in Fig. 8 has been indicated as shown in Fig. 9.

Hence, the compression rod bush 7 in the preferred embodiment can achieve a remarkable improvement in a shimmy performance.

In addition, in the preferred embodiment described above, the sealing operation of the silicone oil 11 is simple. Since the silicone oil 11 is securely sealed by means of the seal projections 15 and sealed amount can become constant, the reliability becomes high.

Since the construction is simple and the number of parts is reduced, the manufacturing cost can be reduced.

As described hereinabove, the structure of the vibration-proof rubber bush can have a high loss factor when the liquid described above is filled therein with simple construction.

## Claims

1. A structure of a vibration-proof rubber bush (7) for a vehicle, comprising:
a) an outer envelope (8) having a bottom;
b) a liquid (11) contained in the outer envelope; and
c) an inner envelope (10) through which a rod end (6a) of a vibrating member (1) is inserted and fixed, the inner envelope (10) being fitted into the outer envelope (8) via an elastic member (9);
characterised in that the inner envelope (10) is attached to an annular member (16) via the elastic member (9), which is located between the envelopes (8,10), and projections (15) extend outwards from the annular member (16), the outer envelope (8) being drawn so as to bring it into close contact with the projections (15), thereby sealing the liquid (11) within the inner part of the outer envelope (8), the annular member (16) being inwardly bent between the projections (15) so as to receive the corresponding part of the outer envelope (8).

2. A structure as claimed in claim 1, in which the liquid (11) comprises a silicone oil.

3. A structure as claimed in claim 1 or 2, in which the vibrating member (1) is a compression rod of a suspension of the vehicle.

4. A structure as claimed in any preceding claim, in which the rod end (6a) is received by a second elastic member (14) attached to the inside of the inner envelope (10).

5. A structure as claimed in any preceding claim, in which a pawl projection (13) extends inwards from the outer envelope (8) so as to engage with a lower end of the annular member (16).

## Patentansprüche

1. Konstruktion einer schwingungsfesten Gummihülse (7) für ein Fahrzeug, die umfaßt:
a) eine äußere Hülle (8) mit einem Boden;
b) eine in der äußeren Hülle enthaltene Flüssigkeit (11); und
c) eine innere Hülle (10), über die ein Stangenende (6a) eines schwingenden Elementes (1) eingeführt und befestigt wird, wobei die innere Hülle (10) über ein elastisches Element (9) in der äußeren Hülle (8) angebracht ist;
**dadurch gekennzeichnet,** daß die innere Hülle (10) über das elastische Element(9) an einem ringförmigen Element (16) angebracht ist, das sich zwischen den Hüllen (8, 10) befindet, und daß sich Vorsprünge (15) von dem ringförmigen Element (16) nach außen erstrecken, wobei die äußere Hülle (8) so gezogen wird, daß sie in engen Kontakt mit den Vorsprüngen (15) gebracht wird, wodurch die Flüssigkeit (11) in dem inneren Teil der äußeren Hülle (8) eingeschlossen wird, wobei das ringförmige Element (16) zwischen den Vorsprüngen (15) nach innen gebogen ist, so daß es den entsprechenden Teil der äußeren Hülle (8) aufnimmt.

2. Konstruktion nach Anspruch 1, wobei die Flüssigkeit (11) aus einem Silikonöl besteht.

3. Konstruktion nach Anspruch 1 oder 2, wobei das schwingende Element (1) eine Druckstange einer Aufhängung des Fahrzeugs ist.

4. Konstruktion nach einem der vorangehenden Ansprüche, wobei das Stangenende (6a) durch ein zweites elastisches Element (14) aufgenommen wird, das an der Innenseite der inneren Hülle (10) angebracht ist.

5. Konstruktion nach einem der vorangehenden Ansprüche, wobei sich ein Klauenvorsprung (13) von der äußeren Hülle (8) nach innen erstreckt, so daß er mit einem unteren Ende des ringförmigen Elementes (16) in Eingriff kommt.

## Revendications

1. Structure d'un manchon en caoutchouc (7) résistant à des vibrations pour un véhicule, comprenant :
a) une enveloppe externe (8) présentant un fond ;
b) un liquide (11) contenu dans l'enveloppe externe ; et
c) une enveloppe interne (10) à travers laquelle une extrémité de tige (6a) d'un élément vibrant (1) est insérée et fixée, l'enveloppe interne (10) étant adaptée dans l'enveloppe externe (8) via un élément élastique (9) ;
caractérisée en ce que l'enveloppe interne (10) est attachée à un élément annulaire (16) via l'élément élastique (9) qui est situé entre les enveloppes (8, 10), et des saillies (15) s'étendent vers l'extérieur depuis l'élément annulaire (16), l'enveloppe externe (8) étant étirée de façon à l'amener en contact proche avec les saillies (15) en scellant ainsi le liquide (11) à l'intérieur de la partie intérieure de l'enveloppe externe (8), l'élément annulaire (16) étant courbé vers l'intérieur entre les saillies (15) de façon à recevoir la partie correspondante de l'enveloppe externe (8).

2. Structure selon la revendication 1, dans laquelle le liquide (11) comprend une huile de silicone.

3. Structure selon la revendication 1 ou 2, dans laquelle l'élément vibrant (1) est une tige de compression d'une suspension du véhicule.

4. Structure selon l'une des revendications précédentes, dans laquelle l'extrémité de tige (6a) est reçue par un deuxième élément élastique (14) attaché à l'intérieur de l'enveloppe interne (10).

5. Structure selon l'une des revendications précédentes, dans laquelle une projection formant patte (13) s'étend vers l'intérieur depuis l'enveloppe externe (8) de façon à être mise en prise avec une extrémité inférieure de l'élément annulaire (16).
